Europäisches Patentamt

European Patent Office

Office européen des brevets

(19)

(11) EP 0 537 041 B1

(12) FASCICULE DE BREVET EUROPEEN

(45) Date de publication et mention
de la délivrance du brevet:
**03.01.1996 Bulletin 1996/01**

(51) Int Cl.⁶: **G05B 9/02**, B21B 33/00

(21) Numéro de dépôt: **92402560.4**

(22) Date de dépôt: **17.09.1992**

(54) **Procédé et dispositif de surveillance de capteurs et de localisation de pannes d'un processus industriel**

Verfahren und Vorrichtung zur Überwachung von Sensoren und zur Fehlerlokalisierung in einem industriellen Prozess

Method and device for monitoring sensors and for locating failures in an industrial process

(84) Etats contractants désignés:
**AT BE CH DE DK ES FR GB GR IT LI LU NL PT SE**

(30) Priorité: **07.10.1991 FR 9112323**

(43) Date de publication de la demande:
**14.04.1993 Bulletin 1993/15**

(73) Titulaire: **SOLLAC**
**F-92800 Puteaux (FR)**

(72) Inventeurs:
• **D'Andrea, Angel**
**Décédé (FR)**

• **Kiener, Philippe**
**F-57050 Le Ban Saint Martin (FR)**
• **Philippe, Denis**
**F-54600 Villers Les Nancy (FR)**
• **Puissant, Alain**
**F-57110 Yutz (FR)**
• **Ragot, José**
**F-54600 Villiers-Les-Nancy (FR)**

(74) Mandataire:
**Habasque, Etienne Joel Jean-François et al**
**F-75441 Paris Cédex 09 (FR)**

(56) Documents cités:
**US-A- 4 249 238      US-A- 5 047 964**

• **PATENT ABSTRACTS OF JAPAN vol. 7, no. 278
(P-242)10 Décembre 1983**

EP 0 537 041 B1

**Description**

La présente invention concerne un procédé et un dispositif de surveillance de capteurs et de localisation de pannes d'un processus industriel.

Un procédé conforme au préambule de la revendication 1 est connu du document US-A-4 249 238.

Dans l'industrie et en particulier dans l'industrie sidérurgique, où l'automatisme prend une part de plus en plus importante, il est de plus en plus fréquent d'automatiser les processus industriels, c'est à dire les successions d'opérations ou d'étapes élémentaires de transformation d'un produit, par lesquelles on agit sur un produit ou élément de matière pour l'amener d'un état initial à un état final déterminé.

Pour cela, des capteurs contrôlant les paramètres du produit à différents stades du processus industriel, par exemple l'épaisseur d'une tôle, sa longueur et sa température dans un processus de laminage à chaud matérialisé par plusieurs cages de laminage, sont disposés après chaque étape élémentaire du processus.

L'information délivrée par chaque capteur est alors saisie dans un calculateur qui selon la valeur de cette information, agit sur les différents dispositifs permettant la mise en oeuvre de ce processus.

Ainsi par exemple, dans le cas du laminage à chaud, une diminution subite d'épaisseur d'une tôle entraîne par réaction automatique, une intervention sur les paramètres de commande de la cage de laminage précédente, en modifiant l'écartement des rouleaux de celle-ci.

De nos jours, on peut considérer que la régulation automatique des processus industriels est très fiable et que l'action corrective face à une information délivrée par un capteur est quasi-immédiate.

Le problème qui se pose pour l'opérateur qui surveille le bon fonctionnement de la régulation, réside dans la fiabilité des différents capteurs.

En effet, il peut arriver que l'information donnée par un capteur ne soit pas le reflet de la situation réelle.

Ceci peut être dû à un mauvais fonctionnement de ce capteur ou à une dérive progressive de celui-ci.

Dans ce cas, les moyens de régulation considérant l'information délivrée par le capteur comme exacte, entraînent une action corrective sur le dispositif permettant la mise en oeuvre du processus, ce qui se répercute à l'état final du produit et se traduit par des défauts de celui-ci.

Ainsi par exemple, dans le cas du laminage, un capteur d'épaisseur qui dérive et fournit une information croissante au calculateur, entraîne automatiquement un rapprochement des rouleaux de la cage de laminage précédente, sans rapport avec la réalité.

Par ailleurs, la présence de capteurs de contrôle à chaque étape du processus industriel à surveiller, conduit rapidement à une multitude de capteurs à installer et à entretenir, ce qui entraîne un coût très élevé et une interprétation des résultats très complexe.

Le but de l'invention est donc de résoudre ces problèmes en proposant un procédé et un dispositif de contrôle du fonctionnement des capteurs et de localisation des pannes d'un processus industriel qui soient simples, fiables, dont la mise en oeuvre soit rapide et d'un prix de revient peu élevé.

A cet effet, l'invention a pour objet un procédé de contrôle du fonctionnement de capteurs et de localisation de pannes d'un processus industriel comportant une succession d'étapes élémentaires P1 à Pn de transformation d'un produit d'un état initial. Yo à un état final Yn, dans lequel chaque étape Pi est caractérisée par des paramètres représentatifs Ai, Bi, ... Xi et chaque état Yi du produit est caractérisé par des paramètres représentatifs ai, bi, ... xi, comportant les étapes suivantes:

- on calcule pour chaque étape Pi du processus, de l'étape P1 à l'étape Pn, les paramètres représentatifs de l'état Yi du produit, à l'aide d'un modèle mathématique Fi représentatif de ladite étape, à partir des paramètres représentatifs de l'état Yi-1 du produit avant l'étape et des paramètres représentatifs de l'étape Pi;

- on mesure les paramètres représentatifs de l'état final Yn du produit;

- on compare les valeurs des paramètres calculés et mesurés représentatifs de l'état final du produit pour en déterminer des écarts; caractérisé en ce que :

- on compare les valeurs des paramètres mesurés à des fourchettes de tolérance et les écarts calculés à des seuils de tolérance pour déterminer, en cas de discordance, un dysfonctionnement d'au moins un capteur et/ou d'au moins une étape du processus;

- en ce que si les valeurs mesurées des paramètres représentatifs de l'état final Yn du produit sont comprises dans les fourchettes de tolérance correspondantes, et si les écarts calculés sont inférieurs aux seuils de tolérance correspondants, on considére que les capteurs et les différentes étapes du processus fonctionnent correctement;

- en ce que si au moins une valeur mesurée d'un paramètre représentatif de l'état Yn du produit dépasse la fourchette de tolérance correspondante et si l'écart associé est inférieur au seuil de tolérance correspondant, on considère que le dysfonctionnement ne vient pas du capteur correspondant, mais d'une ou de plusieurs étapes du processus; et

- en ce que si un écart calculé dépasse le seuil de tolérance correspondant, on considère que soit le capteur correspondant ne fonctionne pas correctement, soit une panne affecte une ou plusieurs étapes du processus industriel.

Selon un autre aspect, l'invention a également pour objet un dispositif pour la mise en oeuvre du procédé tel que décrit précédemment.

L'invention sera mieux comprise à l'aide de la description qui va suivre, donnée uniquement à titre d'exemple et faite en se référant aux dessins annexés, sur lesquels :

- la Fig.l représente une vue schématique illustrant les différentes étapes d'un processus industriel;

- la Fig.2 représente un schéma synoptique d'un dispositif pour la mise en oeuvre d'un procédé selon l'invention;

- la Fig.3 représente un organigramme illustrant le fonctionnement du dispositif représenté sur la Fig.2; et

- la Fig.4 représente une vue schématique d'une application d'un procédé selon l'invention à un train de laminage de bandes.

Ainsi qu'on peut le voir sur la Fig.l, un processus industriel est une succession d'étapes élémentaires désignées par les références P1, P2, P3 et Pn sur cette figure.

Chaque étape est liée à au moins une étape précédente et à au moins une étape suivante, à l'exception bien sûr de la première étape Pl et de la dernière étape Pn.

Chaque étape Pi peut se caractériser par des paramètres d'étape Ai, Bi, ... Xi.

Ainsi, par exemple, l'étape P1 se caractérise par les paramètres Al, B1 ... X1 et l'étape Pn se caractérise par les paramètres An, Bn ... Xn.

Chaque paramètre Ai, Bi ... Xi représentatif de l'étape Pi est mesuré à l'aide d'un capteur de type classique assurant le suivi du processus industriel.

Ces capteurs sont désignés par les références C1, C2, C3 et Cn.

De même, le produit transformé au cours de ce processus industriel, lors des différentes étapes Pi, passe d'un état initial Yo à un état final Yn par une succession d'états intermédiaire.

Chaque état Yi de ce produit peut se caractériser par des paramètres ai, bi ... xi.

Pour les besoins de mise en oeuvre du procédé selon l'invention, seuls les paramètres ao, bo,... xo de l'état initial Yo du produit et les paramètres an, bn,... xn de l'état final Yn du produit, sont mesurés à l'aide de capteurs de type classique, et désignés par les références co et cn respectivement.

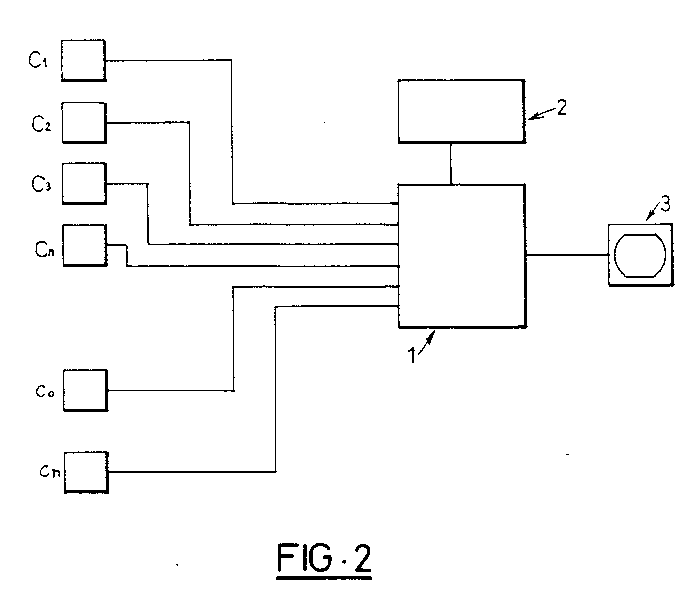

Comme on peut le voir sur la Fig.2, ces différents capteurs sont reliés à une unité centrale de traitement d'informations et de calcul désignée par la référence 1 et constituée par exemple par un ensemble à microprocesseur. Cette unité est reliée à des moyens de mémorisation 2 et à des moyens d'affichage d'informations 3 et réalise les opérations de calcul, de comparaison et de détermination décrites par la suite.

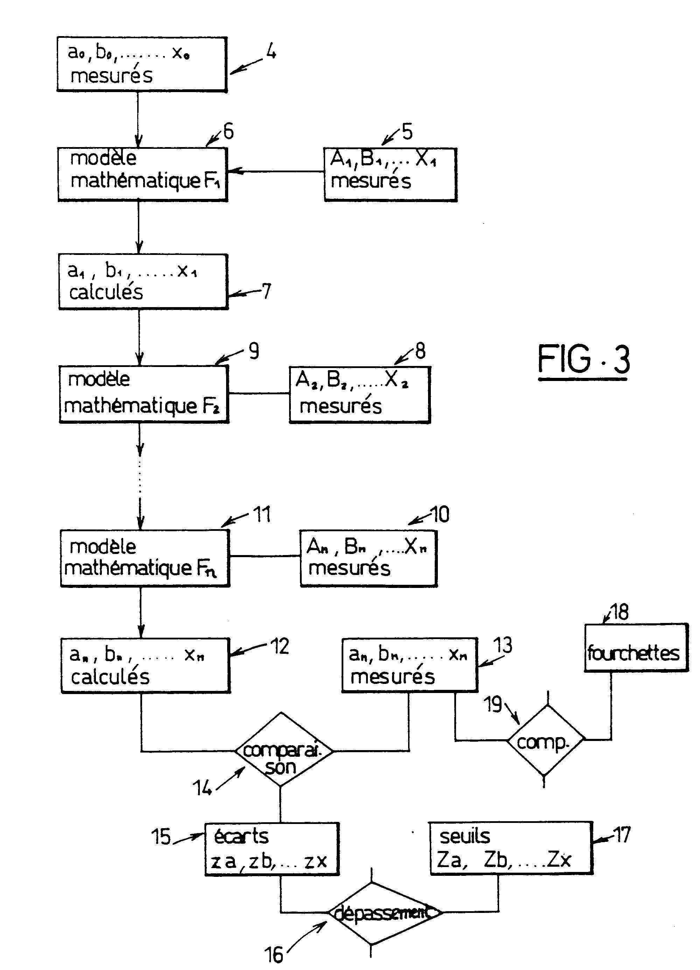

Le fonctionnement de cette unité centrale de calcul et des organes associés sera décrit ci-dessous en regard de la Fig.3.

Comme on peut le voir sur cette Fig.3, il est possible, à partir des valeurs mesurées des paramètres ao, bo ... xo représentatifs de l'état initial Yo du produit, et des paramètres A1, B1,... X1 représentatifs de l'étape P1 du processus, de calculer les paramètres a1, b1 ... x1 représentatifs de l'état Y1 du produit après l'étape P1, à l'aide d'un modèle mathématique qui sera décrit plus en détail par la suite et ceci par la formule suivante :

$$(a1, b1, ... x1) = F1 (ao, bo ... xo, A1, B1 ... X1)$$

On calcule ensuite de manière identique les paramètres représentatifs de l'état Y2 du produit après l'étape P2, à l'aide d'un modèle mathématique F2, à partir des paramètres représentatifs calculés dans l'étape précédente du procédé, et correspondants à l'état Y1 du produit et des paramètres représentatifs de l'étape P2, ce qui donne la formule suivante :

$$(a2, b2, ... x2) = F2 (a1, b1 ... x1, A2, B2, ... X2)$$

On calcule ainsi tous les paramètres ai, bi ... xi des différents états Yi du produit jusqu'aux paramètres représentatifs de l'état final Yn du produit. Ces derniers sont calculés à l'aide d'un modèle mathématique Fn, à partir des paramètres représentatifs de l'état Yn-1 du produit et des paramètres représentatifs de l'étape Pn suivant la formule suivante:

$$(an, bn, xn) = Fn (an-1, bn-1 ... xn-1, An, Bn...Xn)$$

Ces différents calculs sont schématisés sur la Fig.3, dans laquelle on reconnait dans le bloc désigné par la référence 4, la mesure des paramètres représentatifs de l'état initial Yo du produit avant son passage dans la première étape du processus, à l'aide des capteurs co. Les paramètres représentatifs de l'étape P1 sont mesurés en 5 et le calcul à l'aide du modèle mathématique F1 est prévu en 6 pour obtenir, en 7, le calcul des paramètres représentatifs de l'état Y1 du produit. En 8 est prévue la mesure des paramètres représentatifs de l'étape P2 et en 9 le calcul des paramètres représentatifs de l'état Y2 du produit, à l'aide du modèle mathématique F2. Ces différentes opérations se poursuivent jusqu'à la dernière étape Pn du processus industriel.

Lors de ce dernier calcul, les paramètres représentatifs de cette étape Pn sont mesurés en 10 et le calcul, en 11, à l'aide du modèle mathématique Fn permet d'obtenir en 12 les paramètres représentatifs de l'état Yn du produit à la fin du traitement.

Les paramètres calculés représentatifs de l'état Yn du produit sont ensuite comparés à des valeurs de ces paramètres mesurées en 13 à l'aide des capteurs cn décrits précédemment.

Cette comparaison est prévue en 14 et permet de déduire des écarts za, zb,... zx en 15.

Ces écarts za, zb,... zx sont alors comparés en 16 à des seuils de tolérance Za, Zb,... Zx délivrés par une étape 17 et fixés par exemple par un opérateur.

Cet opérateur peut également fixer en 18 des fourchettes de tolérance des paramètres de l'état final Yn du produit, ces fourchettes étant comparées lors de l'étape 19 aux paramètres mesurés lors de l'étape 13 et représentatifs de l'état final du produit.

Plusieurs cas peuvent alors se présenter.

En effet, si les valeurs mesurées des paramètres an,bn,... xn représentatifs de l'état final Yn du produit, sont comprises dans les fourchettes de tolérance correspondantes et si les écarts za, zb,... zx sont inférieurs aux seuils de tolérance Za, Zb,... Zx correspondants, on considère que les différents capteurs et les différentes étapes du processus fonctionnent correctement.

Par contre, si au moins une valeur mesurée d'un paramètre représentatif an, bn,...xn de l'état final Yn du produit dépasse la fourchette de tolérance correspondante et si l'écart za, zb, ... zx associé est inférieur au seuil de tolérance correspondant, on considère que le capteur de mesure de ce paramètre fonctionne correctement et que la discordance est due à un dysfonctionnement d'au moins une étape du processus industriel.

Enfin, si un écart calculé za, zb,... zx dépasse le seuil de tolérance correspond Za, Zb,...Zx, on considère que soit le capteur réalisant la mesure du paramètre considéré ne fonctionne pas correctement, soit une panne affecte une ou plusieurs étapes P1 à Pn du processus industriel.

Il est alors possible grâce à l'unité de calcul de surveiller les valeurs des paramètres ai, bi,...xi de chaque état Yi du produit afin de localiser l'étape Pi au cours de laquelle apparaît le dysfonctionnement.

Ceci est par exemple réalisé par une vérification des bilans matière de chaque étape dans le cas d'un laminage comme cela sera décrit plus en détail par la suite.

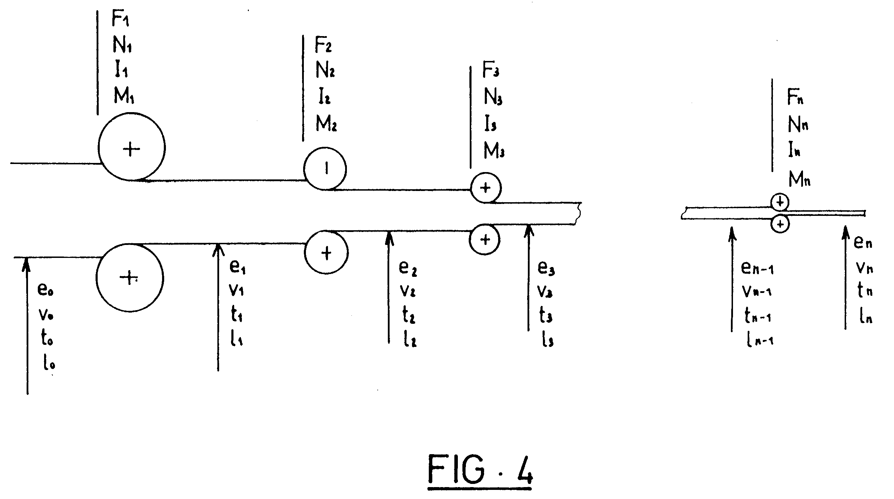

Sur la Fig.4, on a en effet illustré une application de ce procédé et de ce dispositif à la surveillance du fonctionnement d'un train de laminoirs.

Dans ce cas, chaque étape du processus industriel est mis en oeuvre par une cage de laminage.

Le produit à traiter se présente sous la forme d'une bande dont les paramètres représentatifs sont la largeur li, la vitesse de défilement Vi, l'épaisseur ei et la température ti.

Les paramètres représentatifs de chaque étape Pi sont la force exercée par la bande sur les rouleaux de la cage de laminage Fi, la vitesse de rotation des rouleaux de cette cage Ni, l'intensité circulant dans le moteur d'entraînement des rouleaux Ii, et la position des vis de réglage de ces rouleaux Mi.

En amont du processus de laminage, la bande présente une épaisseur eo, une vitesse de défilement avant la première cage de laminage Vo, une température to et une largeur lo.

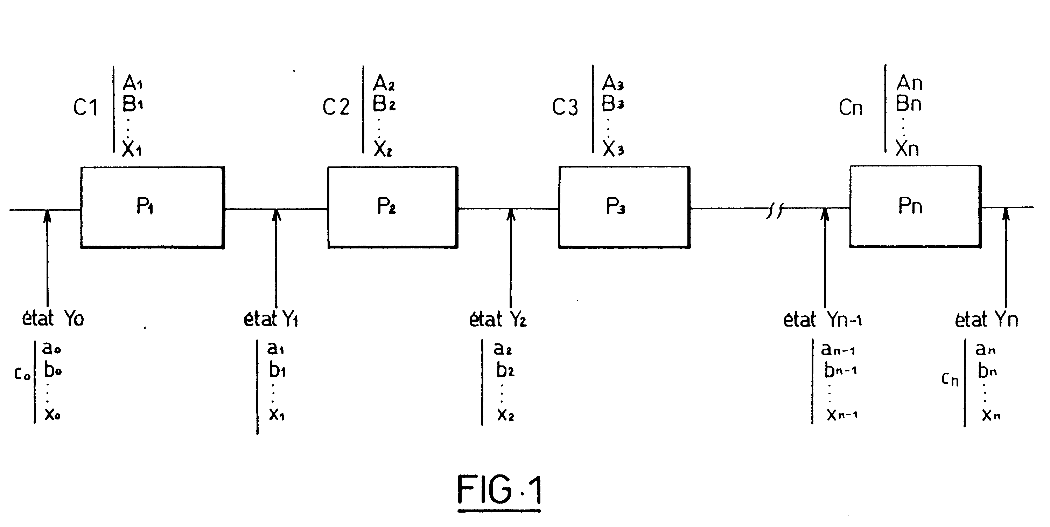

Ces valeurs eo, Vo, to, lo sont soit connues au préalable, soit mesurées à l'aide des capteurs tels que les capteurs co mentionnés en regard de la Fig.1.

Bien entendu, ces différents capteurs sont de type connu en soi et ne seront pas décrits plus en détail.

L'épaisseur de la bande laminée à la sortie de la première cage de laminage est calculée grâce à la formule suivante :

$$e1 = f (M1, F1, lo).$$

Par ailleurs la vitesse de défilement V1 peut également être calculée par exemple à partir du bilan matière de l'étape P1:

$$V1 = g (eo, e1, N1)$$

En utilisant ainsi plusieurs modèles mathématiques, on calcule les différents paramètres du produit.

On calcule alors les paramètres de ce produit pour chaque étape jusqu'à la dernière dans laquelle on obtient les valeurs en,Vn, tn et ln.

L'unité de calcul 1 compare ensuite ces valeurs calculées avec des valeurs mesurées par les capteurs cn représentés sur la Fig.1.

Ainsi, par exemple, cette unité de calcul 1 compare la valeur de en mesurée par un capteur d'épaisseur et la valeur de en calculée.

Si ces deux valeurs sont similaires et que la valeur en mesurée est satisfaisante compte tenu des critères liés au laminage, c'est à dire est comprise dans la fourchette de tolérance correspondante, on considère que l'ensemble du processus et les capteurs fonctionnent correctement.

Si les deux valeurs de en mesurée et calculée sont similaires, et que la valeur de en mesurée n'entre pas dans la fourchette de tolérance correspondante, on en déduit un bon fonctionnement du capteur de mesure de l'épaisseur et un dysfonctionnement au niveau d'une ou de plusieurs cages de laminage.

L'unité de calcul vérifie alors les bilans matière de chaque étape pour en déduire la cage posant problème.

Enfin, si la valeur de en mesurée est différente de la valeur de en calculée, l'unité de calcul conclut à un défaut du capteur de mesure de l'épaisseur en ou à un dysfonctionnement dans le processus, affectant une variable autre que celles prises en compte dans les modèles mathématiques de calcul des paramètres représentatifs des différents états du produit.

## Revendications

1. Procédé de contrôle du fonctionnement de capteurs et de localisation de pannes d'un processus industriel comportant une succession d'étapes élémentaires P1 à Pn de transformation d'un produit d'un état initial Yo à un état final Yn, dans lequel chaque étape Pi est caractérisée par des paramètres représentatifs Ai, Bi, ... Xi et chaque état Yi du produit est caractérisé par des paramètres représentatifs ai, bi, ... xi, comportant les étapes suivantes:

   - on calcule pour chaque étape Pi du processus, de l'étape P1 à l'étape Pn, les paramètres représentatifs de l'état Yi du produit, à l'aide d'un modèle mathématique Fi représentatif de ladite étape, à partir des paramètres représentatifs de l'état Yi-1 du produit avant l'étape et des paramètres représentatifs de l'étape Pi;

- on mesure les paramètres représentatifs de l'état final Yn du produit;

- on compare les valeurs des paramètres calculés et mesurés représentatifs de l'état final du produit pour en déterminer des écarts; caractérisé en ce que :

- on compare les valeurs des paramètres mesurés à des fourchettes de tolérance et les écarts calculés à des seuils de tolérance pour déterminer, en cas de discordance, un dysfonctionnement d'au moins un capteur et/ou d'au moins une étape du processus;

- en ce que si les valeurs mesurées des paramètres représentatifs de l'état final Yn du produit sont comprises dans les fourchettes de tolérance correspondantes, et si les écarts calculés sont inférieurs aux seuils de tolérance correspondants, on considére que les capteurs et les différentes étapes du processus fonctionnent correctement;

- en ce que si au moins une valeur mesurée d'un paramètre représentatif de l'état Yn du produit dépasse la fourchette de tolérance correspondante et si l'écart associé est inférieur au seuil de tolérance correspondant, on considère que le dysfonctionnement ne vient pas du capteur correspondant, mais d'une ou de plusieurs étapes du processus; et

- en ce que si un écart calculé dépasse le seuil de tolérance correspondant, on considère que soit le capteur correspondant ne fonctionne pas correctement, soit une panne affecte une ou plusieurs étapes du processus industriel.

2. Procédé selon l'une quelconque des revendications 1, caractérisé en ce qu'on surveille les valeurs des paramètres de chaque état Yi du produit afin de localiser l'étape Pi du processus au cours de laquelle apparaît le dysfonctionnement.

3. Procédé selon l'une quelconque des revendications précédentes, caractérisé en ce que ledit processus industriel est un processus de laminage d'une bande et en ce que chaque étape Pi est matérialisée par une cage de laminage.

4. Procédé selon la revendication 3, caractérisé en ce que les paramètres ai, bi, ...xi représentatifs de l'état Yi de la bande, sont : la largeur de la bande li, la vitesse de défilement de cette bande Vi, l'épaisseur ei de celle-ci et la température ti de celle-ci.

5. Procédé selon l'une quelconque des revendications 3 ou 4, caractérisé en ce que les paramètres Ai, Bi ... Xi représentatifs de l'étape Pi sont : la force exercée par la bande sur les rouleaux de la cage de laminage Fi, la vitesse de rotation des rouleaux de la cage de laminage Ni, l'intensité du moteur d'entraînement des rouleaux de la cage Ii et la position des vis de réglage des rouleaux de la cage de laminage Mi.

6. Dispositif pour la mise en oeuvre du procédé de contrôle du fonctionnement de capteurs et de localisation de pannes d'un processus industriel comportant une succession d'étapes élémentaires P1 à Pn de transformation d'un produit d'un état initial Yo à un état final Yn, selon l'une quelconque des revendications précédentes, ce dispositif comportant:

- des capteurs (C1 à Cn) pour mesurer les paramètres (Ai, Bi...Xi) représentatifs de chaque étape élémentaires Pi du processus industriel,

- des capteurs (co, cn) pour mesurer les paramètres représentatifs de l'état initial Y0 et de l'état final Yn du produit,

- une unité centrale de traitement d'information et de calcul (1) à laquelle sont reliés ces différents capteurs, cette unité comportant:

des moyens de calcul (6,9,11) pour chaque étape Pi du processus, de l'étape P1 à l'étape Pn, des paramètres représentatifs de l'état Yi du produit, à l'aide d'un modèle mathématique Fi représentatif de ladite étape, à partir des paramètres représentatifs de l'état Yi-1 du produit avant l'étape et des paramètres représentatifs de l'étape Pi; des moyens de comparaison (14) des valeurs des paramètres calculés et mesurés représentatifs de l'état final du produit pour en déterminer des écarts; caractérisé en ce que l'unité centrale (1) comporte en plus des moyens de comparaison (16,19) des valeurs des paramètres mesurés à des fourchettes de tolérance (18) et des écarts calculés à des seuils de tolérance (17) et des moyens d'analyse des résultats fournis par les moyens de comparaison afin de déterminer soit un fonctionnement correct du processus, soit un dysfonctionnement d'une étape, soit une panne d'un capteur.

7. Dispositif selon la revendication 6, dans lequel les moyens de calcul, les moyens de comparaison des valeurs des paramètres calculés et mesurés, les moyens de comparaison des valeurs des paramètres mesurés à des fourchettes de tolérance et des écarts calculés à des seuils de tolérance, et les moyens d'analyse comprennent une unité centrale de traitement et de calcul à microprocesseur (1).

**Patentansprüche**

1. Verfahren zur Überwachung der Funktion von Sensoren und zum Auffinden von Fehlern in einem industriellen Verfahren, das bei der Umwandlung eines Produktes von einem Anfangszustand $Y_0$ in einen Endzustand $Y_n$ eine Folge von Grundschritten $P_1$ bis $P_n$ umfaßt, wobei jeder Schritt $P_i$ durch repräsentative Parameter $A_i$, $B_i$, ... $X_i$ und jeder Zustand $Y_i$ des Produktes durch repräsentative Parameter $a_i$, $b_i$ ... $x_i$ gekennzeichnet ist, mit den folgenden Schritten:

   - vom Schritt $P_1$ bis zum Schritt $P_n$ werden für jeden Schritt $P_i$ des Verfahrens die repräsentativen Parameter des Zustandes $Y_i$ des Produkts errechnet, und zwar mit Hilfe eines für diesen Schritt repräsentativen mathematischen Modells $F_i$, ausgehend von den repräsentativen Parametern des Produktzustandes $Y_{i-1}$ des vorhergehenden Schrittes und von den repräsentativen Parametern des Schrittes $P_i$;

   - die repräsentativen Parameter des Endzustandes $Y_n$ des Produkts werden gemessen;

   - die Werte der berechneten und der gemessenen repräsentativen Parameter des Endzustandes des Produktes werden verglichen, um daraus die Differenzen zu bestimmen; **dadurch gekennzeichnet**, daß:

   - die Werte der gemessenen Parameter mit den Toleranzbereichen und die berechneten Differenzen mit den Toleranzgrenzen verglichen werden, um im Fall einer Abweichung eine Funktionsstörung von mindestens einem Sensor und/oder von mindestens einem Verfahrensschritt zu bestimmen;

   - wobei angenommen wird, daß die Sensoren und die verschiedenen Verfahrensschritte korrekt funktionieren, wenn die gemessenen Werte der repräsentativen Parameter des Endzustandes $Y_n$ des Produktes innerhalb der zugehörigen Toleranzbereiche und die berechneten Differenzen unterhalb der jeweiligen Toleranzgrenzen liegen;

   - wobei angenommen wird, daß die Funktionsstörung nicht durch den jeweiligen Sensor, sondern durch einen oder mehrere Verfahrensschritte hervorgerufen wird, wenn mindestens ein gemessener Wert eines repräsentativen Parameters des Produktzustandes $Y_n$ den entsprechenden Toleranzbereich überschreitet und wenn die zugehörige Differenz unterhalb der entspechenden Toleranzgrenze liegt; und

   - wobei angenommen wird, daß der jeweilige Sensor nicht korrekt funktioniert oder daß in einem oder mehreren Schritten des industriellen Verfahrens ein Fehler vorliegt, wenn eine berechnete Differenz die entsprechende Toleranzgrenze überschreitet.

2. Verfahren nach Anspruch 1, **dadurch gekennzeichnet**, daß die Werte der Parameter von jedem Zustand $Y_i$ des Produktes überwacht werden, um den Schritt $P_i$ des Verfahrens aufzufinden, bei dem die Funktionsstörung auftritt.

3. Verfahren nach einem der vorhergehenden Ansprüche, dadurch gekennzeichnet, daß das industrielle Verfahren ein Verfahren zum Walzen eines Bleches ist und daß jeder Schritt $P_i$ durch einen Walzenständer dargestellt ist.

4. Verfahren nach Anspruch 3, **dadurch gekennzeichnet**, daß die repräsentativen Parameter $a_i$, $b_i$, ...$x_i$ des Zustandes $Y_i$ des Bleches umfassen: die Breite $l_i$ des Bleches, die Fördergeschwindigkeit $V_i$ des Bleches, dessen Dicke $e_i$ und dessen Temperatur $t_i$.

5. Verfahren nach einem der Ansprüche 3 oder 4, **dadurch gekennzeichnet**, daß die repräsentativen Parameter $A_i$, $B_i$, ... $X_i$ des Schrittes $P_i$ umfassen: die vom Blech auf die Walzen des Walzenständers aufgebrachte Kraft $F_i$, die Drehgeschwindigkeit $N_i$ der Walzen des Walzenständers, die Leistung $l_i$ des Antriebsmotors für die Walzen des Walzenständers und die Position $M_i$ der Einstellschrauben der Walzen des Walzenständers.

6. Vorrichtung zur Durchführung des Verfahrens zur Überwachung der Funktion von Sensoren und zum Auffinden von Fehlern in einem industriellen Verfahren nach einem der vorhergehenden Ansprüche, das bei der Umwandlung eines Produktes von einem anfangszustand $Y_0$ in einen Endzustand $Y_n$ eine Folge von Grundschritten $P_1$ bis $P_n$ umfaßt, wobei die Vorrichtung aufweist:

   - Sensoren ($C_1$ bis $C_n$), um für jeden Grundschritt $P_i$ des industriellen Verfahrens die repräsentativen Parameter ($A_i$, $B_i$ ... $X_i$) zu messen,

   - Sensoren ($c_0$, $c_n$), um die repräsentativen Parameter des Anfangszustandes $Y_0$ und des Endzustandes $Y_n$ des Produktes zu messen,

- eine Zentraleinheit (1) zur Verarbeitung und Berechnung von Daten, die mit den verschiedenen Sensoren gekoppelt ist, wobei die Einheit aufweist:

Einrichtungen (6,9,11) , um vom Schritt PI bis zum Schritt Pn für jeden Schritt Pi des verfahrens die repräsentativen Parameter des Zustandes Yi des Produktes zu berechnen, und zwar mit Hilfe eines für diesen Schritt repräsentativen mathematischen Modells Fi, ausgehend von den repräsentativen Parametern des Produktzustandes Yi-1 des vorhergehenden Schrittes und von den repräsentativen Parametern des Schrittes Pi; und Einrichtungen (14) zum Vergleichen der berechneten und gemessenen Werte der repräsentativen Parameter des Endzustandes des Produktes, um daraus die Differenzen zu bestimmen; **dadurch gekennzeichnet**, daß die Zentraleinheit (1) Einrichtungen (16, 19), um die gemessenen Werte der Parameter mit den Toleranzbereichen (18) und die berechneten Differenzen mit den Toleranzgrenzen (17) zu vergleichen, und Einrichtungen enthält, um die von den Vergleichseinrichtungen gelieferten Werte zu analysieren, um die korrekte Funktionweise des Verfahrens, eine Funktionsstörung eines Schrittes oder den Fehler eines Sensors zu bestimmen.

7. Vorrichtung nach Anspruch 6, bei der die Berechnungseinrichtungen, die Einrichtungen, um die berechneten Werte mit den gemessenen Werten der Parameter zu vergleichen, die Einrichtungen, um die gemessenen Werte der Parameter mit dem Toleranzbereich und um die berechneten Differenzen mit den Toleranzgrenzen zu vergleichen, und die Analyseeinrichtungen eine Mikroprozessor-Zentraleinheit (1) zur Verarbeitung und Berechnung umfassen.

**Claims**

1. Method of checking the functioning of sensors and of locating faults in an industrial process comprising a sequence of elementary stepd P1 to Pn for converting a product from an initial state Y0 to a final state Yn, in which each step Pi is characterised by representative parameters Ai, Bi ... Xi and each state Yi of the product is characterised by representative parameters ai, bi, ... xi, comprising the following steps:

- for each step Pi of the process, from step P1 to step Pn, the parameters representative of the state Yi of the product are computed with the aid of a mathematical model Fi representative of the said step, from the parameters representative of the state Yi-1 of the product before the step and from the parameters representative of step Pi;

- the parameters representative of the final state Yn of the product are measured;

- the values of the computed and measured parameters representative of the final state of the product are compared in order to determine therefrom deviations; characterised in that:

- the value of the measured parameters are compared with tolerance brackets and the computed deviations are compared with tolerance thresholds in order to determine, in the event of a disagreement, a malfunction of at least one sensor and/or of at least one step of the process;

- in that if the measured values of the parameters representative of the final state Yn of the product lie within the corresponding tolerance brackets, and if the computed deviations are less than the corresponding tolerance thresholds, the sensors and the various steps of the process are regarded as functioning correctly;

- in that if at least one measured value of a parameter representative of the state Yn of the product exceeds the corresponding tolerance bracket and if the associated deviation in less than the corresponding tolerance threshold, the malfunction is regarded as originating not from the corresponding sensor, but from one or more steps of the process; and

- in that if a computed deviation exceeds the corresponding tolerance threshold, either the corresponding sensor is regarded as functioning incorrectly, or a fault is regarded as affecting one or more steps of the industrial proces.

2. Method according to Claim 1, characterised in that the values of the parameters of each state Yi of the product are monitored so as to locate the step Pi of the process in the course of which the malfunction appears.

3. Method according to either one of the preceding claims, characterised in that the said industrial process is a process of rolling a strip and in that each step Pi is embodied through a rolling stand.

4. Method according to Claim 3, characterised in that the parameters ai, bi, ... Xi representative of the state Yi of the strip are: the width of the strip li, the feed rate of this strip Vi, its thickness ei and its temperature ti.

5. Method according to either one of Claims 3 and 4, characterised in that the parameters Ai, Bi ... Xi representative of step Pi are : the force exerted by the strip on the rolls of the rolling stand Fi, the rate of rotation of the rolls of the rolling stand Ni, the current in the drive motor for the rolls of the stand Ii and the position of the adjusting screws for the rolls of the rolling stand Mi.

6. Device for implementing the method of checking the functioning of sensors and of locating faults in an industrial process comprising a sequence of elementary steps P1 to Pn for converting a product from an initial state Y0 to a final state Yn, according to any one of the preceding claims, this device comprising:

   - sensors (C1 to Cn) for measuring the parameters (Ai, Bi... .Xi) representative of each elementary step Pi of the industrial process,

   - sensors (co, cn) for measuring the parameters representative of the initial state Y0 and of the final state Yn of the product,

   - a central information-processing and computation unit (1) to which these various sensors are connected, this unit comprising:

   - means (6,9,11) computing, for each step Pi of the process, from step P1 to step Pn, the parameters representative of the state Yi of the product, with the aid of a mathematical model Fi representative of the said step, from the parameters representative of the state Yi-1 of the product before the step and from the parameters representative of step P1; means (14) of comparing the values of the computed and measured parameters representative of the final state of the product in order to determine therofrom deviations; characterised in that the central unit (1) additionally comprises means (16, 13) of comparing the values of the measured parameters with tolerance brackets (18) and the computed deviations with tolerance thresholds (17), and means for analysing the results supplied by the comparison means in order to determine either correct functioning of the process or a malfunction of a step or breakdown of a sensor.

7. Device according to Claim 6, in which the computation means, the means of comparing the values of the computed and measured parameters, the means of comparing the values of the measured parameters with tolerance brackets and the computed deviations with tolerance thresholds, and the analysis means comprise a microprocessor central processing and computation unit (1).

FIG·1

## FIG · 2

FIG · 3

# FIG · 4

EP 0 537 041 B1